(19) Europäisches Patentamt
European Patent Office
Office européen des brevets

(11) Veröffentlichungsnummer: **0 109 527**
**A1**

# (12) EUROPÄISCHE PATENTANMELDUNG

(21) Anmeldenummer: **83110112.6**

(22) Anmeldetag: **11.10.83**

(51) Int. Cl.³: **C 09 B 29/42**
C 09 B 29/01
//D06P1/18

(30) Priorität: **25.10.82 DE 3239436**

(43) Veröffentlichungstag der Anmeldung:
**30.05.84 Patentblatt 84/22**

(84) Benannte Vertragsstaaten:
**BE CH DE FR GB IT LI**

(71) Anmelder: **CASSELLA Aktiengesellschaft**
**Hanauer Landstrasse 526**
**D-6000 Frankfurt am Main 61(DE)**

(72) Erfinder: **Tappe, Horst, Dr.**
**Ringstrasse 9**
**D-6075 Dietzenbach(DE)**

(72) Erfinder: **Kühlein, Klaus, Dr.**
**Fasanenweg 41**
**D-6233 Kelkheim(DE)**

(72) Erfinder: **Bührer, Ulrich, Dr.**
**Kastanienweg 8**
**D-8755 Alzenau(DE)**

(72) Erfinder: **Hähnke, Manfred, Dr.**
**Behringstrasse 13**
**D-6233 Kelkheim(DE)**

(72) Erfinder: **Bode, Albert**
**Finkenweg 1**
**D-6231 Schwalbach(DE)**

(74) Vertreter: **Urbach, Hans-Georg, Dr.**
**Hanauer Landstrasse 526**
**D-6000 Frankfurt am Main 61(DE)**

(54) **Wasserunlösliche Monoazofarbstoffe, Verfahren zu deren Herstellung und Verwendung.**

(57) Farbstoffe der Formel

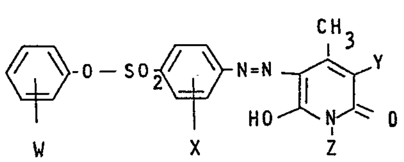

worin W Wasserstoff, einen aliphatischen Rest, CN, Halogen, $CF_3$, Nitro, $-OR^1$, $-COR^2$, $-SO_2R^2$ oder $-COOR^2$, $R^1$ einen aliphatischen Rest, $R^2$ einen aliphatischen Rest, X Wasserstoff, einen aliphatischen Rest, Cyan, Nitro oder Halogen, Y Cyan, Alkoxycarbonyl, Aminocarbonyl, Aminosulfonyl, Phenylsulfonyl, Alkylsulfonyl und Z Wasserstoff, einen aliphatischen Rest oder Phenyl bedeuten, werden durch Diazotierung und Kupplung hergestellt.

EP 0 109 527 A1

Ref.3261

Dr.Eu/Jt

Wasserunlösliche Monoazofarbstoffe, Verfahren zu deren Herstellung und Verwendung

Die Erfindung betrifft wasserunlösliche Azofarbstoffe der allgemeinen Formel I

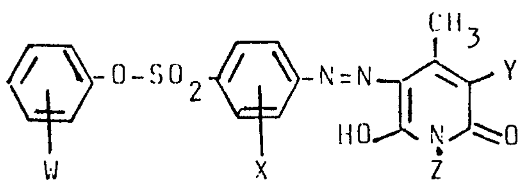

(I)

worin

W Wasserstoff, gegebenenfalls substituiertes Alkyl mit 1 bis 8 C-Atomen, Alkenyl mit 3 bis 7 C-Atomen, CN, Halogen, $CF_3$, Nitro, $-OR^1$, $-COR^2$, $-SO_2R^2$, oder $-COOR^2$,

$R^1$ gegebenenfalls substituiertes Alkyl mit 1 bis 4 C-Atomen, Alkenyl mit 3 bis 7 C-Atomen,

$R^2$ Alkyl mit 1 bis 4 C-Atomen, Alkenyl mit 3 bis 7 C-Atomen,

X Wasserstoff, gegebenenfalls substituiertes Alkyl mit 1 bis 4 C-Atomen, Cyan, Nitro oder Halogen,

Y Cyan, Alkoxycarbonyl mit 1 bis 4 C-Atomen im Alkoxyrest, Aminocarbonyl, dessen Amino-Gruppe auch durch Phenyl monosubstituiert oder durch Alkyl mit 1 bis 4 C-Atomen mono- oder disubstituiert sein kann, Aminosulfonyl, dessen Aminogruppe auch durch Phenyl monosubstituiert oder durch Alkyl mit 1 bis 4 C-Atomen mono- oder disubstituiert sein kann, Phenylsulfonyl, Alkylsulfonyl mit 1 bis 4 C-Atomen im Alkylrest und

Z Wasserstoff, Alkenyl mit 3 bis 7 C-Atomen, gegebenenfalls substituiertes Alkyl mit 1 bis 10 C-Atomen, das auch durch Sauerstoff ein- oder mehrfach unterbrochen sein kann, Cycloalkyl mit 5 bis 7 C-Atomen oder Phenyl

bedeuten.

Die Erfindung betrifft außerdem ein Verfahren zur Herstellung der genannten Farbstoffe und ihre Verwendung zum Färben und Bedrucken von synthetischem, hydrophoben Fasermaterial allein oder von Fasermischungen, die solches Material enthalten.
Die Alkyl- oder Alkenylreste können geradkettig oder verzweigt sein.
Als Substituenten für die für W, $R^1$ und Z stehenden substituierten Alkylreste kommen insbesondere in Betracht:

Hydroxy, Alkoxy-alkoxy, insbesondere mit 1 bis 4 C-Atomen in jedem Alkoxyrest, Phenyl, Nitrophenyl, durch Alkyl mit 1 bis 4 C-Atomen substituiertes Phenyl, Phenoxy, dessen Phenylkern auch durch Nitro oder Alkyl mit 1 bis 4 C-Atomen substituiert sein kann, Alkenyl, insbesondere mit 3 bis 7 C-Atomen, Halogen, Alkoxy, insbesondere mit 1 bis 4 C-Atomen und gegebenenfalls substituiert durch Phenoxy, Hydroxy oder -O-CO-Alkyl, insbesondere mit 1 bis 4 C-Atomen im Alkylrest.

Halogen bedeutet insbesondere Fluor, Chlor oder Brom.

Beispiele für geeignete Alkylreste sind: Methyl, Ethyl, n-Propyl, i-Propyl, n-Butyl, i-Butyl, sec.-Butyl, tert.-Butyl, n- und iso-Pentyl, n- und iso-Hexyl, n- und iso-Octyl, n- und iso-Decyl, 2-Ethyl-hexyl.

Für Z stehende Alkylreste können, wenn sie 2 oder mehr C-Atome, vorzugsweise 3 oder mehr C-Atome besitzen, auch durch Sauerstoff ein- oder mehrfach, vorzugsweise einfach, unterbrochen sein.

Falls Z Wasserstoff bedeutet, können die Farbstoffe der Formel I auch noch in anderen tautomeren Formen vorliegen.

W bedeutet vorzugsweise Wasserstoff oder Alkyl mit 1 bis 4 C-Atomen, insbesondere Methyl. X bedeutet vorzugsweise Wasserstoff. Y bedeutet vorzugsweise Cyan und Z bedeutet vorzugsweise Alkyl mit 1 bis 9 C-Atomen, das auch durch Sauerstoff ein- oder mehrfach, vorzugsweise einfach, unterbrochen und/oder durch Phenyl, Hydroxy oder Alkoxy mit 1 bis 4 C-Atomen substituiert sein kann. Bevorzugte Farbstoffe der Formel I sind solche, die in einem, mehreren oder vorzugsweise allen der Reste W, X, Y oder Z die vorstehend genannten bevorzugten Substituenten besitzen. Demnach sind besonders bevorzugte Farbstoffe der Formel I solche, bei denen W Wasserstoff oder Alkyl mit 1 bis 4 C-Atomen, vorzugsweise Methyl, X Wasserstoff, Y Cyan und Z, Alkyl mit bis 8 C-Atomen, das auch durch Sauerstoff ein-oder mehrfach unterbrochen und/oder durch Phenyl, Hydroxy oder Alkoxy mit 1 bis 4 C-Atomen substituiert sein kann, bedeuten.

Ganz besonders bevorzugt sind solche Farbstoffe der Formel I, bei denen W Methyl, X Wasserstoff, Y Cyan und Z einen durch Sauerstoff unterbrochenen Alkylrest der Formel $-(CH_2)_m-O-(CH_2)_n-CH_3$ bedeuten, worin m eine ganze Zahl von 2 bis 5 und n eine ganze Zahl von 0 bis 3 bedeuten und die demnach der Formel II entsprechen:

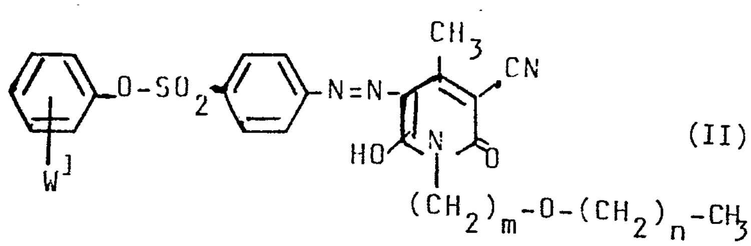

(II)

wobei $W^1$ für o-, m-, p-Methyl steht.

In der folgenden Tabelle sind besonders bevorzugte Farbstoffe der Formel II angegeben; dabei sind in der ersten Spalte die Bedeutung und die Stellung von $W^1$ und in den beiden anderen Spalten die Bedeutungen von m und n genannt:

| W' | m | n |
|---|---|---|
| p - $CH_3$ | 3 | 0 |
| m - $CH_3$ | 3 | 0 |
| p - $CH_3$ | 3 | 1 |
| m - $CH_3$ | 2 | 1 |
| p - $CH_3$ | 3 | 3 |
| m - $CH_3$ | 3 | 3 |

Die neuen Farbstoffe der Formeln I und II können in an sich bekannter Weise durch Diazotieren eines Amins der Formel III

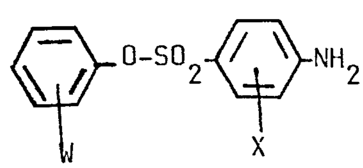

(III)

und Kuppeln auf ein Pyridon der Formel IV

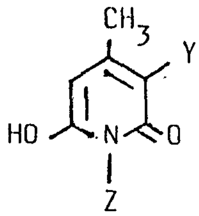

(IV)

hergestellt werden, wobei W, X, Y und Z die angegebenen Bedeutungen besitzen.

Die Amine der Formel III sind bekannt oder können nach bekannten Methoden hergestellt werden. Bevorzugt werden sie aus Verbindungen der Formel V

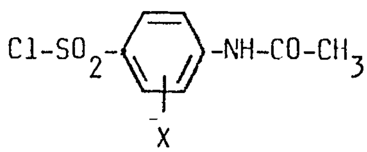

(V)

durch Umsetzung mit Verbindungen der Fórmel VI,

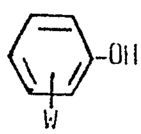

(VI)

worin W und X die unter I angegebenen Bedeutungen besitzen, erhalten, gegebenenfalls in einem wäßrig-organischen Zweiphasensystem unter Einsatz eines Phasentransferkatalysators, und anschließender **hydrolytischer Abspaltung der Acetylgruppe.**

Als Amine der Formel III seien beispielsweise genannt:
4-Amino-4'-methyl-benzolsulfonsäure-phenylester
4-Amino-3'-methyl-benzosulfonsäure-phenylester
4-Amino-4'-ethoxy-benzolsulfonsäure-phenylester
4-Amino-3-nitro-benzolsulfonsäure-phenylester
4-Amino-3-nitro-4'-ethyl-benzolsulfonsäure-phenylester
4-Amino-benzolsulfonsäure-phenylester.

Auch die Kupplungskomponenten der Formel IV sind zum größten Teil bekannt. Sie lassen sich nach an sich bekannten Verfahren herstellen, insbesondere lassen sie sich durch Kondensation von Acetessigestern der Formel VII

$CH_3$-CO-$CH_2$-COOR Y-$CH_2$-COOR $H_2NZ$

(VII) (VIII) (IX)

mit Essigestern der Formel VIII und Aminen der Formel IX, wobei Y und Z die bereits genannten Bedeutungen besitzen, R Alkyl mit 1 bis 4 C-Atomen bedeutet, nach den Lehren von Bobbit und Scola (J. Org. Chem. 25. 560 (1960)) herstellen. Man kann auch zunächst den Ester VIII mit dem Amin IX zu dem Amid X

Y - $CH_2$-CO-NH-Z (X)

und dieses mit dem Acetessigester VII, oder zunächst dem Acetessigester VII mit dem Amin IX zu dem Acetessigamid XI

$CH_3$-CO-$CH_2$-CO-NH-Z (XI)

und dieses mit dem Ester VIII umsetzen, um die Pyridon-Kupplungskomponente der Formel IV zu erhalten.

Man verwendet insbesondere Kupplungskomponenten der Formel IV, worin Y eine Cyan-Gruppe bedeutet und Z für eine geradkettige oder verzweigte Alkylgruppe mit 1 bis 8 C-Atomen steht, die gegebenenfalls ein- oder mehrfach von Sauerstoff unterbrochen ist, insbesondere ist Z die 3-Methoxy-n-propyl-gruppe, 3-Ethoxy-n-propyl-gruppe oder 3-n-Butoxy-n-propylgruppe.

Geeignete Kupplungskomponenten der Formel IV sind beispielsweise:

3-Cyan-4-methyl-6-hydroxy-pyridon(2),
1-Methyl-3-cyan-4-methyl-6-hydroxy-pyridon(2),
1-Ethyl-3-cyan-4-methyl-6-hydroxy-pyridon(2),
1-n-Propyl-3-cyan-4-methyl-6-hydroxy-pyridon(2),
1-i-Propyl-3-cyan-4-methyl-6-hydroxy-pyridon(2),
1-n-Butyl-3-cyan-4-methyl-6-hydroxy-pyridon(2),
1-n-Hexyl-3-cyan-4-methyl-6-hydroxy-pyridon(2),
1-(2-Ethyl-hexyl)-3-cyan-4-methyl-6-hydroxy-pyridon(2),
1-i-Heptyl-3-cyan-4-methyl-6-hydroxy-pyridon(2),
1-Phenyl-3-cyan-4-methyl-6-hydroxy-pyridon(2),
1-ß-Hydroxyethyl-3-cyan-4-methyl-6-hydroxy-pyridon(2),
1-(3-Methoxypropyl)-3-cyan-4-methyl-6-hydroxy-pyridon(2),
1-Phenoxymethyl-3-cyan-4-methyl-6-hydroxy-pyridon(2),
1-(3-Ethoxy-propyl)-3-cyan-4-methyl-6-hydroxy-pyridon(2),
1-(3-n-Butoxy-propyl)-3-cyan-4-methyl-6-hydroxy-pyridon(2)

Die erfindungsgemäßen Farbstoffe eignen sich sehr gut zum Färben und Bedrucken von Gebilden aus synthetischen Materialien, wie beispielsweise Polyacrylnitril, Polyamid, Cellulose-2 1/2-acetat, Cellulosetriacetat und insbesondere Polyestermaterialien, z.B. Polyethylenglykolterephthalat und modifizierte Typen von Polyacrylnitril, Polyamid und Polyestern. Sie liefern hierauf nach den üblichen Färbe- und Druckverfahren farbstarke, klare gelbe Färbungen und Drucke mit sehr guten Echtheiten, insbesondere sehr guter Licht-, Trockenhitzeplissier- und Trockenhitzefixierechtheit und guten Thermomigrierechtheiten. Die erfindungsgemäßen Farbstoffe besitzen ferner gute Chlor- und Naßechtheit, wie Wasser-, Schweiß- und Waschechtheit, eine gute pH-Stabilität und kein "catalytic-fading" in Kombination mit Blaufarbstoffen. Die erfindungsgemäßen Farbstoffe sind bekannten ähnlichen Farbstoffen, z.B. denen der DE-OS 21 50 226, in ihren coloristischen Eigenschaften überlegen.

Es ist vorteilhaft, die Farbstoffe vor ihrer Verwendung in an sich bekannter Weise in eine feine Verteilung zu überführen. Dazu werden die trockenen Farbstoffe oder die Farbstoffpasten in Gegenwart von Dispergiermitteln gemahlen und gegebenenfalls durch Zerstäuben getrocknet.

Das Färben der genannten Materialien erfolgt zweckmäßig aus wäßriger Dispersion, gegebenenfalls in Gegenwart von Carriern zwischen etwa 80°C und 130°C, in Abwesenheit von Carriern zwischen etwa 90°C bis 140°C, wie nach dem sogenannten Thermofixierverfahren bei etwa 170°C bis 240°C.

Das Bedrucken der genannten Materialien kann so durchgeführt werden, daß die mit den neuen Farbstoffen bedruckte Ware in Gegenwart eines Carriers bei Temperaturen zwischen etwa 80°C und 110°C oder auch in Abwesenheit eines Carriers, bei etwa 110°C bis 180°C dämpft oder auch nach dem sogenannten Thermofixierverfahren bei etwa 180°C bis 240°C behandelt wird.

Die erfindungsgemäßen Farbstoffe eignen sich auch zum Färben der vorstehend aufgeführten hydrophoben Materialien aus organischen Lösungsmitteln oder zum Färben in der Masse.

Im folgenden bedeuten Teile Gewichtsteile.

<u>Beispiel 1</u>

a) 26,3 Teile 4-Amino-4'-methyl-benzolsulfonsäurephenylester werden in 100 Teilen Essigsäure mit 32,6 Teilen 42%iger Nitrosylschwefelsäure in Schwefelsäure in 30 Minuten bei 15°C bis 20°C unter Außenkühlung diazotiert und das Reaktionsgemisch 1 Stunde bei 15°C nachgerührt.

Die erhaltene Diazolösung läßt man dann in eine Suspension von 22,2 Teilen 1-(3-Methoxy-propyl)-3-cyan-4-methyl-6-hydroxy-pyridon(2) in 300 Teilen Wasser und 4 g NaOH in 30 Minuten einfließen und hält die Reaktionstemperatur während der Kupplung durch Zugabe von 400 Teilen Eis bei 0°C bis +5°C. Der entstandene Farbstoff wird nach beendeter Kupplung abgesaugt, mit Wasser neutral gewaschen und getrocknet. Man erhält 49,1 Teile Farbstoffpulver vom Schmelzpunkt 178°C des Farbstoffs der Formel XII

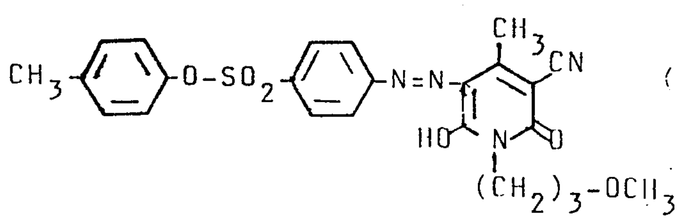

(XII)

b) 1,0 Teile des so erhaltenen Farbstoffs der Formel XII werden in feindispergierter Form in 2000 Teile Wasser eingerührt. Es wird mit Essigsäure auf einen pH-Wert von 5-6 eingestellt und mit 4,0 Teilen Ammoniumsulfat und 2,0 Teilen eines handelsüblichen Dispergiermittels auf Basis eines Naphthalinsulfonsäure-Formaldehyd-Kondensats versetzt.

In die so erhaltene Färbeflotte bringt man 100 Gewichtsteile eines Polyestergewebes auf Basis von Polyethylenglykolterephthalat ein und färbt 1 Stunde bei 130°C.

Nach anschließendem Spülen und Trocknen erhält man eine klare, farbstarke grünstichig gelbe Färbung mit sehr guten coloristischen Eigenschaften, insbesondere sehr guter Licht- und Thermofixierechtheit.

c) Die in Beispiel a) benötigten Ausgangsprodukte werden wie folgt hergestellt:

Man legt 400 Teile Chlorsulfonsäure vor, trägt unter Kühlung in 45 Minuten 179 Teile Essigsäureanilid bei 20-25°C ein, heizt auf 60°C, rührt 2 Stunden bei 60°C, kühlt auf 20°C ab und gießt auf eine Mischung von 2000 Teilen Eis, 200 Teilen Wasser und 200 Teilen NaCl. Das ausgefallene 4-N-Acetylamino-benzolsulfonsäurechlorid

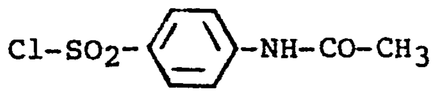

wird abfiltriert und in 45 min bei 50-52°C zu einer Lösung von 129,7 Teilen p-Cresol in 800 Teilen Wasser und 50 Teilen NaOH gegeben, wobei man durch Zugabe von 29 Teilen 27%iger Natronlauge den pH-Wert unter 9,5 hält. Es wird 1,5 Stunden bei 70°C nachgerührt, auf 20°C abgekühlt, das Produkt der folgenden Formel abgesaugt

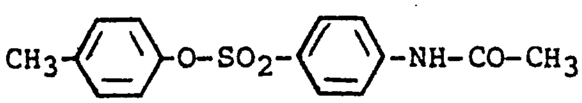

zu einer Mischung von 360 Teilen Wasser und 285 Teilen konz. Salzsäure gegeben und 30 Minuten am Rückfluß erhitzt. Dann kühlt man ab, filtriert und trocknet. Man erhält 123 Teile des Amins der folgenden Formel vom Schmelzpunkt 139°C.

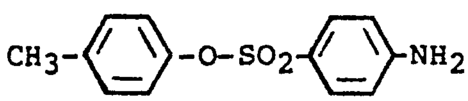

83,1 Teile Acetessigsäureethylester und 59,6 Teile einer 48,1%igen, wäßrigen Ethylaminlösung werden im Autoklaven 2 Stunden bei 90-95°C gerührt, auf 20°C abgekühlt, mit 100 Teilen Cyanessigsäure-3-methoxypropylamid und 5,4 Teilen einer 48,1%igen, wäßrigen Ethylaminlösung versetzt und danach unter Druck 20 Stunden bei 90-95°C gerührt. Man kühlt auf 20C ab, gibt das Reaktionsgemisch auf 510 Teile halbkonzentrierte Salzsäure, kühlt auf 5°C ab, filtriert und

wäscht den Rückstand mit 300 Teilen halbkonzentrierter Salzsäure. Nach dem Trocknen erhält man 117 Teile des Pyridons der folgenden Formel vom Schmelzpunkt 209°C.

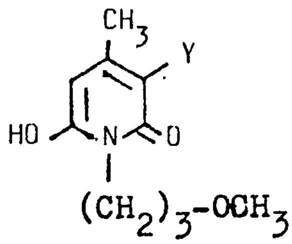

Das Cyanessigsäure-3-methoxy-propylamid wird wie folgt hergestellt:

In 452 Teile vorgelegten Cyanessigsäureethylester werden bei 40-45°C in 1 Stunde 367 Teile 3-Methoxy-propylamin getropft, 9 Stunden lang bei 20°C gerührt und dann unter vermindertem Druck destilliert. Bei 0,133 mbar und 154°C destillieren 571 Teile des Cyanessigsäure-3-methoxy-propylamids in reiner Form.
Die anderen Ausgangsprodukte der Formeln III und IV können analog hergestellt werden.

Beispiel 2

a) 26,3 Teile 4-Amino-3'-methyl-benzolsulfonsäurephenylester werden wie in Beispiel 1 a) beschrieben diazotiert und auf 22,2 Teile 1-(3-Methoxy-propyl)-3-cyan-4-methyl-6-hydroxypyridon(2) gekuppelt. Der entstandene Farbstoff wird nach beendeter Kupplung abgesaugt, mit Wasser neutral gewaschen und getrocknet. Man erhält 47,5 Teile des Farbstoffs der Formel XIII vom Schmelzpunkt 146°C.

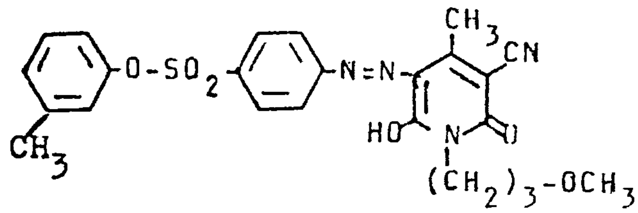

(XIII)

b) 30 Teile des Farbstoffs der Formel werden in feiner Verteilung einer Druckpaste, die 45,0 Teile Johannisbrotkernmehl, 6,0 Teile 3-nitro-benzolsulfonsaures Natrium und 3,0 Teile Zitronensäure auf 1000 Teile enthält, einverleibt.

Mit dieser Druckpaste erhält man auf einem Polyestergewebe nach dem Bedrucken, Trocknen und Fixieren im Thermofixierrahmen während 45 Sekunden bei 215°C Spülen, reduktiver Nachbehandlung mit einer 0,2%igen alkalischen Natriumdithionitlösung während 15 Minuten bei 60-70°C, Spülen und Trocknen einen farbstarken, gelben Druck mit sehr guten Echtheitseigenschaften, insbesondere einer sehr guten Licht-, Trockenhitzeplissier- und Trockenhitzefixierechtheit.

Beispiel 3

a) 24,9 Teile 4-Amino-benzolsulfonsäure-phenylester werden wie in Beispiel 1a) beschrieben diazotiert und auf 23,6 Teile 1-(3-Ethoxy-propyl)-3-cyan-4-methyl-6-hydroxy-pyridon(2) gekuppelt. Man erhält nach dem Abfiltrieren, Waschen und Trocknen 48,2 Teile des Farbstoffs der Formel XIV vom Schmelzpunkt 139°C.

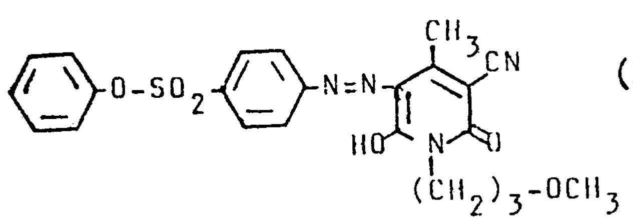

(XIV)

Analog den vorstehenden Beispielen werden die in der nachstehenden Tabelle angegebenen Farbstoffe hergestellt. Sie färben hydrophobe Fasern, wie Polyesterfasern, in klaren, grünstichig gelben Farbtönen mit guten Echtheiten an.

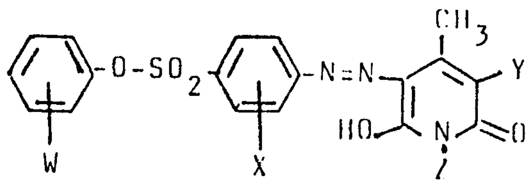

| W | X | Y | Z |
|---|---|---|---|
| H | H | CN | H |
| 3-$CH_3$ | H | CN | H |
| 3-$C_2H_5$ | H | CN | H |
| $4_n$-$CH_3$ | H | CN | H |
| 4-$C_2H_5$ | H | CN | H |
| 4-n$C_3H_7$ | H | CN | H |
| 4-n$C_4H_9$ | H | CN | H |
| 3-n$C_3H_7$ | H | CN | H |
| 3-n$C_4H_9$ | H | CN | H |
| 3-n$C_5H_{11}$ | H | CN | H |
| 4-n$C_7H_{15}$ | H | CN | H |
| 4-sec.$C_4H_9$ | H | CN | H |
| 4-$C_8H_{17}$ | H | CN | H |
| 2-$CH_3$ | H | CN | H |
| 2-$C_2H_5$ | H | CN | H |
| H | H | CN | $CH_3$ |

| | | | |
|---|---|---|---|
| 3-$CH_3$ | H | CN | $CH_3$ |
| 3-$C_2H_5$ | H | CN | $CH_3$ |
| 4-$CH_3$ | H | CN | $CH_3$ |
| 4-$C_2H_5$ | H | CN | $CH_3$ |
| 4-$CH_3$ | H | CN | $CH_3$ |
| 4-$C_2H_5$ | H | CN | $CH_3$ |
| 4-$nC_3H_7$ | H | CN | $CH_3$ |
| 4-$nC_4H_9$ | H | CN | $CH_3$ |
| 4-$nC_5H_{11}$ | H | CN | $CH_3$ |
| 3-$nC_4H_9$ | H | CN | $CH_3$ |
| 3-$nC_5H_{11}$ | H | CN | $CH_3$ |
| 3-$nC_7H_{15}$ | H | CN | $CH_3$ |
| 4-$nC_7H_{15}$ | H | CN | $CH_3$ |
| 4-sec.$C_4H_9$ | H | CN | $CH_3$ |
| 4-$C_8H_{17}$ | H | CN | $CH_3$ |
| 2-$CH_3$ | H | CN | $CH_3$ |
| 4-$C_4H_9$ | H | CN | $CH_3$ |
| 4-$CH_3$ | H | CN | $C_2H_5$ |
| 3-$CH_3$ | H | CN | $C_2H_5$ |
| H | H | CN | $C_2H_5$ |
| 3-$C_2H_5$ | H | CN | $C_2H_5$ |
| 4-$C_2H_5$ | H | CN | $C_2H_5$ |
| 4-$nC_4H_9$ | H | CN | $C_2H_5$ |
| 4-$nC_4C_9$ | 3-$nC_4H_9$ | CN | $C_2H_5$ |
| 4-Br | 3-Br | CN | $C_2H_5$ |
| H | 3-$CH_3$ | CN | $C_2H_5$ |
| H | H | CN | $(CH_2)_3O(CH_2)_3CH_3$ |
| 4-$CH_3$ | H | CN | $(CH_2)_3O(CH_2)_3CH_3$ |
| 3-$CH_3$ | H | CN | $(CH_2)_3O(CH_2)_3CH_3$ |
| 3-$C_2H_5$ | H | CN | $(CH_2)_3O(CH_2)_3CH_3$ |
| 4-$C_2H_5$ | H | CN | $(CH_2)_3O(CH_2)_3CH_3$ |
| 4-$nC_3H_7$ | H | CN | $(CH_2)_3O(CH_2)_3CH_3$ |
| 4-$nC_4H_9$ | H | CN | $(CH_2)_3O(CH_2)_3CH_3$ |
| 4-$nC_5H_{11}$ | H | CN | $(CH_2)_3O(CH_2)_3CH_3$ |

| | | | |
|---|---|---|---|
| 3-$nC_3H_7$ | H | CN | $(CH_2)_3O(CH_2)_3CH_3$ |
| 3-$nC_4H_9$ | H | CN | $(CH_2)_3O(CH_2)_3CH_3$ |
| 3-$nC_5H_{11}$ | H | CN | $(CH_2)_3O(CH_2)_3CH_3$ |
| 3-$nC_7H_{15}$ | H | CN | $(CH_2)_3O(CH_2)_3CH_3$ |
| 4-$nC_7H_{15}$ | H | CN | $(CH_2)_3O(CH_2)_3CH_3$ |
| 4-sec.$C_4H_9$ | H | CN | $(CH_2)_3O(CH_2)_3CH_3$ |
| 4-$C_8H_{17}$ | H | CN | $(CH_2)_3O(CH_2)_3CH_3$ |
| 2-$CH_3$ | H | CN | $(CH_2)_3O(CH_2)_3CH_3$ |
| 2-$C_2H_5$ | H | CN | $(CH_2)_3O(CH_2)_3CH_3$ |
| 3-$CH_3$ | 2-$CH_3$ | CN | $nC_4H_9$ |
| 3-$CH_3$ | 3-$CH_3$ | CN | $(CH_2)_2O(C_2H_5)$ |
| 3-$CH_3$ | 2-$C_2H_5$ | CN | $(CH_2)_3OC_2H_5$ |
| 3-$CH_3$ | 3-$nC_3H_7$ | CN | $(CH_3)_3OC_2H_5$ |
| 3-$CH_3$ | 2-$nC_4H_9$ | CN | $(CH_3)_3O(CH_2)$ |
| 3-$CH_3$ | 3-i-$C_4H_9$ | CN | $(CH_2)_3OC_2H_5$ |
| 3-$CH_3$ | 2-CN | CN | $(CH_2)_3OC_2H_5$ |
| 3-$CH_3$ | 3-$NO_2$ | CN | $(CH_2)_3OC_2H_5$ |
| 3-$CH_3$ | 3-Br | CN | $(CH_2)_3OC_2H_5$ |
| 3-$CH_3$ | 2-Cl | CN | $(CH_2)_3OC_2H_5$ |
| 3-$CH_3$ | H | CN | $(CH_2)_3OC_2H_5$ |
| 4-$CH_3$ | H | CN | $(CH_2)_3OC_2H_5$ |
| H | H | CN | $(CH_2)_3OCH_3$ |
| 3-$CH_3$ | H | CN | $(CH_2)_3OCH_3$ |
| 3-$C_2H_5$ | H | CN | $(CH_2)_3OCH_3$ |
| 4-$CH_3$ | H | CN | $(CH_2)_3OCH_3$ |
| 4-$C_2H_5$ | H | CN | $(CH_2)_3OCH_3$ |
| 4-$nC_3H_7$ | H | CN | $(CH_2)_3OCH_3$ |
| 4-$nC_4H_9$ | H | CN | $(CH_2)_3OCH_3$ |
| 4-$nC_5H_{11}$ | H | CN | $(CH_2)_3OCH_3$ |
| 3-$nC_3H_7$ | H | CN | $(CH_2)_3OCH_3$ |
| 3-$nC_4H_9$ | H | CN | $(CH_2)_3OCH_3$ |
| 3-$nC_5H_{11}$ | H | CN | $(CH_2)_3OCH_3$ |
| 3-$nC_7H_{15}$ | H | CN | $(CH_2)_3OCH_3$ |
| 4-$nC_7H_{15}$ | H | CN | $(CH_2)_3OCH_3$ |
| 4-$C_4H_7$ | H | CN | $(CH_3)_3OCH_3$ |

| | | | |
|---|---|---|---|
| 4-$C_5H_9$ | H | CN | $(CH_3)_3OCH_3$ |
| 4-$C_6H_{11}$ | H | CN | $(CH_3)_3OCH_3$ |
| 3-$C_7H_{13}$ | H | CN | $(CH_3)_3OCH_3$ |
| 4-CN | H | CN | $(CH_3)_3OCH_3$ |
| 3-CN | H | CN | $(CH_3)_3OCH_3$ |
| 4-Br | H | CN | $(CH_3)_3OCH_3$ |
| 3-Cl | H | CN | $(CH_3)_3OCH_3$ |
| 4-$CF_3$ | H | CN | $(CH_3)_3OCH_3$ |
| 4-$NO_2$ | H | CN | $(CH_3)_3OCH_3$ |
| 3-$NO_2$ | H | CN | $(CH_3)_3OCH_3$ |
| 2-Cl | H | CN | $(CH_3)_3OCH_3$ |
| 4-$OCH_3$ | H | CN | $(CH_3)_3OCH_3$ |
| 3-$OC_2H_5$ | H | CN | $(CH_3)_3OCH_3$ |
| 2-$OCH_3$ | H | CN | $(CH_3)_3OCH_3$ |
| 4-$OC_4H_9$n | H | CN | $(CH_3)_3OCH_3$ |
| 4-CO-$CH_3$ | H | CN | $(CH_3)_3OCH_3$ |
| 3-CO-$C_2H_5$ | H | CN | $(CH_3)_3OCH_3$ |
| 4-$SO_2$-$CH_3$ | H | CN | $(CH_3)_3OCH_3$ |
| 3-$SO_2$-$CH_3$ | H | CN | $(CH_3)_3OCH_3$ |
| 3-$SO_2$-$C_4H_9$n | H | CN | $(CH_3)_3OCH_3$ |
| 4-$COOC_2H_5$ | H | CN | $(CH_3)_3OCH_3$ |
| 4-i-$C_4H_9$ | H | CN | $(CH_3)_3OCH_3$ |
| H | H | CN | $(CH_2)_3OC_2H_5$ |
| 3-$C_2H_5$ | H | CN | $(CH_2)_3OC_2H_5$ |
| 4-$C_2H_5$ | H | CN | $(CH_2)_3OC_2H_5$ |
| 4-n$C_3H_7$ | H | CN | $(CH_2)_3OC_2H_5$ |
| 4-n$C_4H_9$ | H | CN | $(CH_2)_3OC_2H_5$ |

| | | | |
|---|---|---|---|
| 4-$nC_5H_{11}$ | H | CN | $(CH_2)_3OC_2H_5$ |
| 3-$nC_3H_7$ | H | CN | $(CH_2)_3OC_2H_5$ |
| 3-$nC_4H_9$ | H | CN | $(CH_2)_3OC_2H_5$ |
| 3-$nC_5H_{11}$ | H | CN | $(CH_2)_3OC_2H_5$ |
| 2-$CH_3$ | H | CN | $(CH_2)_3OC_2H_5$ |
| 2-$C_2H_5$ | H | CN | $(CH_2)_3OC_2H_5$ |
| H | H | CN | $(CH_2)_2OC_2H_5$ |
| 3-$CH_3$ | H | CN | $(CH_2)_2OC_2H_5$ |
| 3-$C_2H_5$ | H | CN | $(CH_2)_2OC_2H_5$ |
| 4n-$CH_3$ | H | CN | $(CH_2)_2OC_2H_5$ |
| 4-$C_2H_5$ | H | CN | $(CH_2)_2OC_2H_5$ |
| 4-$nC_3H_7$ | H | CN | $(CH_2)_2OC_2H_5$ |
| 4-$nC_4H_9$ | H | CN | $(CH_2)_2OC_2H_5$ |
| 4-$nC_5H_{11}$ | H | CN | $(CH_2)_2OC_2H_5$ |
| 3-$nC_3H_7$ | H | CN | $(CH_2)_2OC_2H_5$ |
| 3-$nC_4H_9$ | H | CN | $(CH_2)_2OC_2H_5$ |
| 3-$nC_5H_{11}$ | H | CN | $(CH_2)_2OC_2H_5$ |
| 2-$CH_3$ | H | CN | $(CH_2)_2OC_2H_5$ |
| 2-$C_2H_5$ | H | CN | $(CH_2)_2OC_2H_5$ |
| 4-$CH_3$ | H | CN | $(CH_2)_4OCH_3$ |
| 4-$CH_3$ | H | CN | $(CH_2)_4OC_2H_5$ |
| 3-$CH_3$ | H | CN | $(CH_2)_4O(CH_2)_2CH_3$ |
| 4-$CH_3$ | H | CN | $(CH_2)_4O(CH_2)_3CH_3$ |
| 4-$CH_3$ | H | CN | $(CH_2)_5OCH_3$ |
| 3-$CH_3$ | H | CN | $(CH_2)_5OC_2H_5$ |
| H | H | CN | $(CH_2)_3O(CH_2)_3CH_3$ |
| 3-$CH_3$ | H | CN | $(CH_2)_3O(CH_2)_3CH_3$ |
| 3-$C_2H_5$ | H | CN | $(CH_2)_3O(CH_2)_3CH_3$ |
| 4-$C_2H_5$ | H | CN | $(CH_2)_3O(CH_2)_3CH_3$ |
| 4-$nC_3H_7$ | H | CN | $(CH_2)_3O(CH_2)_3CH_3$ |

| | | | |
|---|---|---|---|
| 4-$nC_4H_9$ | H | CN | $(CH_2)_3O(CH_2)_3CH_3$ |
| 4-$nC_5H_{11}$ | H | CN | $(CH_2)_3O(CH_2)_3CH_3$ |
| 3-$nC_3H_7$ | H | CN | $(CH_2)_3O(CH_2)_3CH_3$ |
| 3-$nC_4H_9$ | H | CN | $(CH_2)_3O(CH_2)_3CH_3$ |
| 3-$nC_5H_{11}$ | H | CN | $(CH_2)_3O(CH_2)_3CH_3$ |
| 3-$nC_7H_{15}$ | H | CN | $(CH_2)_3O(CH_2)_3CH_3$ |
| 4-$nC_7H_{15}$ | H | CN | $(CH_2)_3O(CH_2)_3CH_3$ |
| 4-sec.$C_4H_9$ | H | CN | $(CH_2)_3O(CH_2)_3CH_3$ |
| 4-$C_8H_{17}$ | H | CN | $(CH_2)_3O(CH_2)_3CH_3$ |
| 2-$CH_3$ | H | CN | $(CH_2)_3O(CH_2)_3CH_3$ |
| 2-$C_2H_5$ | H | CN | $(CH_2)_3O(CH_2)_3CH_3$ |
| 3-$C_3H_5$ | H | CN | $(CH_2)_3O(CH_2)_3CH_3$ |
| 4-$C_3H_5$ | H | CN | $(CH_2)_3O(CH_2)_3CH_3$ |
| 3-$CH_3$ | H | CN | $(CH_2)_5O(CH_2)_3CH_3$ |
| 4-$CH_3$ | H | CN | $(CH_2)_5O(CH_2)_3CH_3$ |
| 4-$CH_3$ | H | CN | n-$C_6H_{13}$ |
| 4-$CH_3$ | H | CN | 2-Ethyl-hexyl |
| 4-$CH_3$ | H | CN | $-C_2H_4-C_6H_5$ |
| 4-$CH_3$ | H | CN | $-CH_2CH_2OH$ |
| 4-$CH_3$ | H | CN | $-CH_2CH_2OC_6H_5$ |

1

Patentansprüche:

1. Wasserunlösliche Monoazofarbstoffe der allgemeinen Formel I

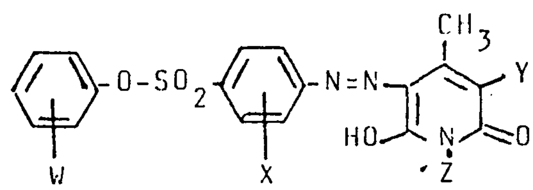

(I)

worin

W Wasserstoff, gegebenenfalls substituiertes Alkyl mit 1-8 C-Atomen, Alkenyl mit 3 bis 7 C-Atomen, CN, Halogen, $CF_3$, Nitro, $-OR^1$, $-COR^2$, $-SO_2R^2$ oder $-COOR^2$,

$R^1$ gegebenenfalls substituiertes Alkyl mit 1 bis 4 C-Atomen, Alkenyl mit 3 bis 7 C-Atomen,

$R^2$ Alkyl mit 1 bis 4 C-Atomen, Alkenyl mit 3 bis 7 C-Atomen,

X Wasserstoff, gegebenenfalls substituiertes Alkyl mit 1-4 C-Atomen, Cyan, Nitro oder Halogen,

Y Cyan, Alkoxycarbonyl mit 1-4 C-Atomen im Alkoxyrest, Aminocarbonyl, dessen Aminogruppe auch durch Phenyl monosubstituiert oder durch Alkyl mit 1-4 C-Atomen mono- oder disubstituiert sein kann, Aminosulfonyl, dessen Aminogruppe auch durch Phenyl monosubstituiert oder durch Alkyl mit 1-4 C-Atomen mono- oder disubstituiert sein kann, Phenylsulfonyl, Alkylsulfonyl mit 1-4 C-Atomen im Alkylrest und

Z Wasserstoff, Alkenyl mit 3-7 C-Atomen, gegebenenfalls substituiertes Alkyl mit 1-10 C-Atomen, das auch durch Sauerstoff ein- oder mehrfach unterbrochen sein kann, Cycloalkyl mit 5-7 C-Atomen oder Phenyl

bedeuten.

2. Azofarbstoffe nach Anspruch 1, dadurch gekennzeichnet, daß die für W, $R^1$ oder Z stehenden substituierten Alkylreste durch Hydroxy, Alkoxy-alkoxy, insbesondere mit 1 bis 4 C-Atomen in jedem Alkoxyrest, Phenyl, Nitrophenyl, durch Alkyl mit 1 bis 4 C-Atomen substituiertes Phenyl, Phenoxy, dessen Phenylkern auch durch Nitro oder Alkyl mit 1 bis 4 C-Atomen substituiert sein kann, Alkenyl, insbesondere mit 3 bis 7 C-Atomen, Halogen, Alkoxy, insbesondere mit 1 bis 4 C-Atomen und gegebenenfalls substituiert durch Phenoxy, Hydroxy oder -O-CO-Alkyl, insbesondere mit 1 bis 4 C-Atomen im Alkylrest, substituiert sind.

3. Azofarbstoffe nach Anspruch 1 und/oder 2, dadurch gekennzeichnet, daß

W Wasserstoff oder Alkyl mit 1 bis 4 C-Atomen

Y Cyan

Z Alkyl mit 1 bis 9 C-Atomen, das auch durch Sauerstoff ein- oder mehrfach unterbrochen und/oder durch Phenyl, Hydroxy oder Alkoxy mit 1 bis 4 C-Atomen substituiert sein kann,

bedeuten.

4. Wasserunlösliche Azofarbstoffe nach einem oder mehreren der Ansprüche 1 bis 3, dadurch gekennzeichnet, daß sie die allgemeine Formel II

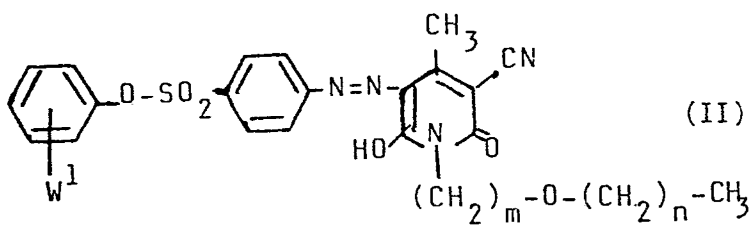

(II)

besitzen, wobei $W^1$ für Wasserstoff oder o-, m-, p-Methyl steht und m eine Zahl von 2 bis 5 und n eine Zahl von 0 bis 3 bedeuten.

5. Azofarbstoffe nach Anspruch 4, dadurch gekennzeichnet, daß $W^1$ Wasserstoff, m- oder p-Methyl und m = 2 oder 3 und n = 0, 1 oder 3 bedeuten.

6. Azofarbstoff nach einem oder mehreren der Ansprüche 1 bis 5, dadurch gekennzeichnet, daß er die Formel

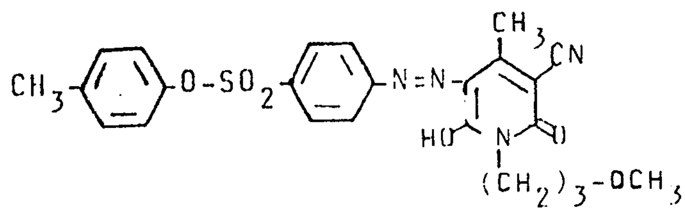

oder

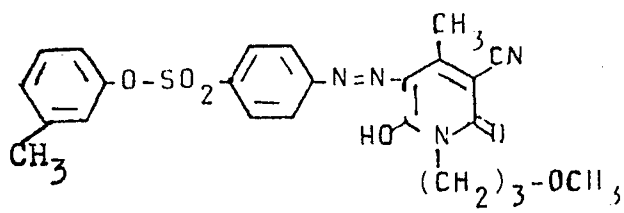

oder

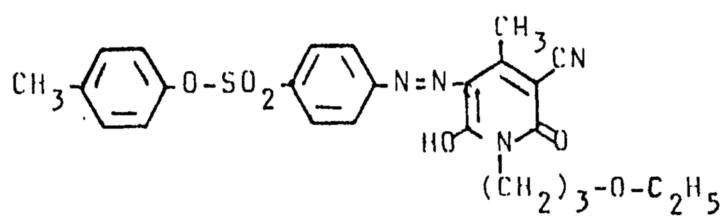

oder

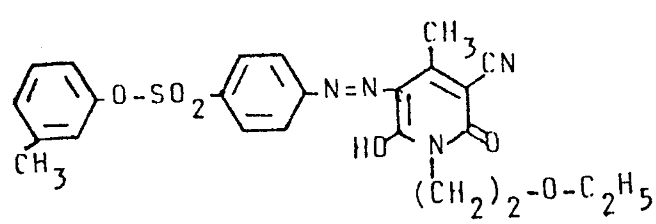

oder

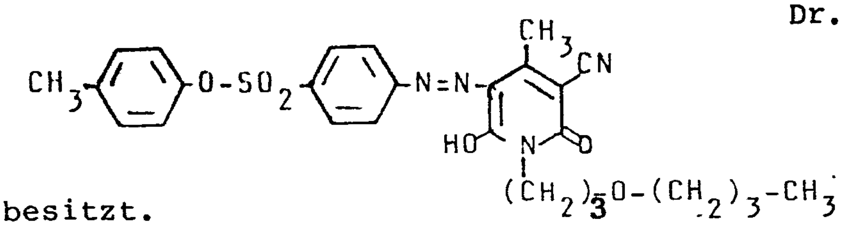

besitzt.

7. Verfahren zur Herstellung von Farbstoffen der Ansprüche 1 bis 8, dadurch gekennzeichnet, daß eine Diazokomponente der Formel III

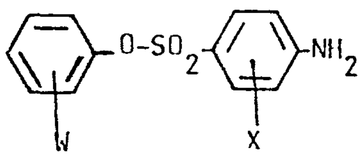

diazotiert und auf eine Kupplungskomponente der Formel IV

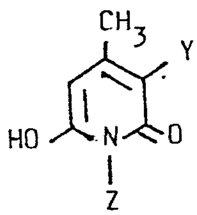

gekuppelt wird, wobei W, X, Y und Z die in den Ansprüchen 1 bis 3 angegebene Bedeutung besitzen.

8. Verwendung der Azofarbstoffe nach den Ansprüchen 1 bis 6 oder der gemäß dem Verfahren des Anspruchs 7 erhaltenen Azofarbstoffe zum Färben und Bedrucken von Textilmaterial, das mit Dispersionsfarbstoffen anfärbbar ist.

9. Verfahren zum Färben und Bedrucken von synthetischem, hydrophobem Fasermaterial, insbesondere Polyester und Gemischen solcher Materialien mit Cellulose, dadurch gekennzeichnet, daß man Farbstoffe nach den Ansprüchen 1 bis 6 einsetzt.

10. Das mit mindestens einem Azofarbstoff eines oder mehrerer der Ansprüche 1 bis 6 gefärbte oder bedruckte Textilmaterial.

Europäisches Patentamt

**0109527**

# EUROPÄISCHER RECHERCHENBERICHT

Nummer der Anmeldung

EP 83 11 0112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-1 644 121 (CASSELLA)<br>* Seite 1, Absatz 3 - Seite 2, Absatz 3; Seite 3, Zeilen 6,14,15 *<br>--- | 1,3,7-10 | C 09 B 29/42<br>C 09 B 29/01 //<br>D 06 P 1/18 |
| Y | DE-A-2 916 861 (BAYER)<br>* Seite 1, Patentanspruch 1 *<br>--- | 1,7-10 | |
| Y | DE-A-2 150 226 (SANDOZ)<br>* Seite 2, Formel I; Seite 3, Absatz 2 - Seite 4, Absatz 1 *<br>--- | 1,3,7-10 | |
| A | DE-A-1 817 977 (CASSELLA)<br>* Seite 1, Formel I *<br>----- | 1,3,7-10 | RECHERCHIERTE SACHGEBIETE (Int. Cl. 3)<br>C 09 B 29/00 |

Der vorliegende Recherchenbericht wurde für alle Patentansprüche erstellt.

| Recherchenort | Abschlußdatum der Recherche | Prüfer |
|---|---|---|
| DEN HAAG | 06-02-1984 | GREEN C.H. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument